(19) Europäisches Patentamt / European Patent Office / Office européen des brevets

(11) **EP 3 471 031 A1**

(12) **EUROPEAN PATENT APPLICATION**

(43) Date of publication:
17.04.2019 Bulletin 2019/16

(51) Int Cl.:
**G06Q 10/06** *(2012.01)*

(21) Application number: **17425098.5**

(22) Date of filing: **12.10.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(71) Applicant: **RA.M.OIL S.p.A.**<br>**80121 Napoli (IT)** | (72) Inventors:<br>• **Del Prete, Antonio**<br>  **73100 Lecce (LE) (IT)**<br>• **Capalbo, Vincenzo**<br>  **73100 Lecce (LE) (IT)**<br>• **Donnabella, Maurizio**<br>  **80121 Napoli (NA) (IT)**<br><br>(74) Representative: **Conversano, Gabriele**<br>**Laforgia, Bruni & Partners srl**<br>**Via Michele Garruba, 3**<br>**70122 Bari (IT)** |

(54) **WORKING GROUP MANAGEMENT SYSTEM OPTIMIZED TO IMPROVE HUMAN RESOURCES MANAGEMENT AND KNOWLEDGE ASSESSMENT**

(57) Method for managing and assessing human resources skills in an organization, comprising the steps of:
i) defining a project comprising at least a relevant activity and assigning said project to a project manager (PM);
ii) defining a skills dictionary where the skills needed for the development of all company activities are defined and type-classified;
iii) defining a personal data registry of human resources, where all data relating to people who work with any qualification in an organization, are contained;
iv) at the beginning of his own collaboration with said organization, each one of said people carries out an assessment of his own skills, wherein for each one of said skills defined at point i) the person assigns a level on the basis of the self-assessment of his own skills;
v) said PM carries out another assessment of skills of each one of said people;
vi) defining a workers team to be assigned to said project on the basis of the assessments at points v) and vi).

**Description**

Technical field

The present invention relates to a method for managing workers knowledge inside project-oriented organizations.

In many contexts, working reality makes use of teams made up of company resources and groups of multi-skilled experts, distributed in various organizational structures and whose team participation is focused on reaching a specific target, and therefore, is time-limited.

Typically, these teams of experts collaborate on the development of a new product/service, help carry out a project or provide a certain service, and do not stay in the team for the whole duration of the project or activity but they go in and out from the team according to the project needs.

These organizational models are considered extremely efficient at favouring innovation since they allow to develop products and services focusing on the customer needs. They are characterized by high flexibility, little use of hierarchy and by informal communication mechanisms between managers and workers, which guarantee complex horizontal interactions which are the main source of innovation.

While the most part of vertical companies is approaching *project-oriented* and *process-oriented* models, the fast increase in information and communications technologies have helped make emerge and impose what has been defined *network organization,* and which is turning out to be efficient both in manufacturing and services.

Online collaboration, made easier by means of tools and collaborative working environments, favours a common knowledge among working groups and brings them to reach common targets.

The Collaborative Working Environment (CWE) definition means a working environment where participants can collaborate by means of technological tools which allow to communicate synchronously (by means of conferences or instant messaging, etc.) or asynchronously (such as for example calendar, scheduler, email, forum etc.) for working activities development. As a consequence there arises the problem of data safety and information transfer since a working method comprising a CWE enables to share knowledge and its re-usage between knowledge workers belonging to various organizations.

In this context it emerged, becoming always more critical, the problem to map skills of people working in the organization.

On the one hand, in knowledge-oriented companies it is required the presence in the organization of people who are able firstly to pick up and create knowledge. On the other hand, especially for the working organization and the definition of the company structure, it is crucially important to be able to know and measure workers abilities and skills.

Generally, the two just described targets cannot be reached easily by means of the software applications currently known at the state of the art, and therefore, the organizations are constantly in search for both innovative applications and services to improve business processes.

Therefore, aim of the present invention is to provide a method for managing and assessing human resources skills, which can be easily introduced in company processes, and in particular easily introduced in the definition of new working teams and in the assessment of the work done and the relative acquired skills.

Yet, the present invention provides the most objective possible method for assessing human resources abilities. Therefore, the present invention provides useful elements for defining a Collaborative Working Environment able to support dynamic management of company processes, which is oriented to favour collaboration between members of an organization and to guarantee autonomy and full transparency of working activities.

According to another aim the present invention provides a computer program, implementing such method and which makes it simply and directly usable by the company workers.

The present invention reaches the prefixed aims since it is a method for managing and assessing human resources skills in an organization, comprising the steps of:

i) defining a project comprising at least a relevant activity and assigning said project to a project manager (PM);
ii) defining a skills dictionary where the skills needed for the development of all company activities are defined and type-classified;
iii) defining a personal data registry of human resources, where all data relating to people who work with any qualification in an organization, are contained;
iv) at the beginning of his own collaboration with said organization, each one of said people carries out an assessment of his own skills, wherein for each one of said skills defined at point i) the person assigns a level on the basis of the self-assessment of his own skills;
v) said PM carries out another assessment of skills of each one of said people;
vi) defining a workers team to be assigned to said project on the basis of the assessments at points v) and vi).

Description of the invention

The program implementing the method according to the invention comprises workflows managing tools and project management tools. Such tools are conveniently implemented in web-based applications which allow their remote and multi-user use: all these tools together build a CWE. The characterizing part of the CWE formed by means of the program according to the invention is the presence of a specific function relating to the management and assessment of human resources skills.

Before the detailed description in the following, it is to be said that skill can be classified in four parts:

- explicit knowledge: it is the knowledge contained in documents, that can be readily articulated, read and reproduced;
- created knowledge: it is the skill "hidden" in data and the result of processing the same, which relates for example to statistics of sale data or to the assessment of human resources on the basis of their work;
- embedded knowledge: it is the knowledge embedded in the way of doing things, in the organizational procedures;
- tacit or implicit knowledge: it is the knowledge residing in the "head" of each person, sometimes not expressible but able to guide and influence continuously the work of each one.

The sequence describing these different components reflects an order going from the knowledge most divisible from the person possessing it to the least divisible one. In fact while the first component (explicit knowledge) is characterized by a high divisibility grade of the same knowledge from the person possessing it, while approaching tacit knowledge this feature diminishes up to come to the point where knowledge is completely indivisible from people possessing it.

Individuating knowledge components with different features implies that the organization has to face up to the problem to manage each one of them differently.

In order to be able to manage skills it is needed to define the following elements:

- the skills dictionary that allows to define and classify skills by kind and sector;
- personal data registries of human resources, where there are contained all the data relating to people who work with any qualification in an organization;
- skills matching with human resources, wherein to each person contained in the personal data registry there are associated one or more skill types among those ones contained in the skills dictionary.

It is clear that the real management problem is objectively matching skills with human resources, and moreover, tracing the development of the skills of each person over time, explicitly considering that acquiring skills is a dynamic process.

By using the new CWE implemented in the program according to the present invention it is possible to assess work and skills of human resources on the basis of the activities done and on the basis of the quality of the work done.

The assessment can be done according to three modes:

- self-assessment;
- first assessment by the Project Manager (PM);
- assessment by the PM in closing step of a relevant activity (milestone).

The aspect common to the three modes is that after the assessment to each resource is assigned one or more skills, with relative level.

These assessments will be used as input for the determination algorithm of the skill level reached by the resource while accomplishes his tasks over time and develops projects to which he participates, in the following described in detail.

Firstly, the method provides that each worker states his own skills when he goes in the organization. The whole self-assessments will constitute a first version of human resources/skills matching.

Self-assessment

In this first step the worker can establish his own skills and assign to himself (actually to his own record inside the human resources personal data registry) a knowledge level by using a scale of qualitative values, for example of the following type:

- foreign: almost no knowledge, confused ideas,
- beginner: some concepts, few and disjointed,
- incisive: concepts sustained by expertise,

- thorough: solid skill and expertise
- major: specialization sector

The knowledge level introduced in this step is essentially linked to the worker past, i.e. the expertise developed outside the company environment; the skills he is going to acquire daily by participating in the project activities will be recorded in the following by the Project Manager (PM).

First assessment of PM

When it is needed to create a new team or it is needed to introduce a new resource in a yet formed team, the PM can introduce a first judgment on the worker, carrying out an assessment of his skills; such judgment is based on an interview carried out with the same worker and/or on possessed references.

At this point of the procedure there are provided two assessments of the worker skills, and so, the calculation of the whole judgment of the worker skills will be based on what stated by the same worker and what stated in the first PM assessment step.

PM Assessment at closing a milestone

As yet said the assessment of skills is a process which lasts over time; the human resources learn and/or improve their skills while doing their tasks. Such variations are assessed and registered by PM in closing step of each milestone.

The method provides that, at the closing of a milestone:

i) there are identified punctually the workers associated to the milestone and the skills, among those present in the skills dictionary, needed to do the activity contained therein;

ii) the PM carries out a punctual assessment for each worker and for each skill, of the level reached, on the basis of the quality of the results reached and of the time used for closing each activity.

Automatic calculation of assessments

The skill of each worker is calculated as the average of the results obtained in each milestone closing over time, considering also the first assessment carried out by the PM, and if this one lacks, the self-assessment of the worker. By this mechanism, over time the results obtained on field will be always more important than those expressed by the worker or PM, in decontextualized way with regard to the real work done in company. The formula used is the following:

$$Ms = \frac{1}{n}\sum_{i=1}^{n} x_i$$

where:

Ms is the assessment of the specific skill for the specific human resource,
n is the number of assessments provided for a determined user skill,
$x_i$ is the value of each assessment.

Functions deriving form the skills assessment

By providing, on the basis of the results obtained by each worker, an ever more realistic matching of skills of all the human resources, with the method according to the invention it is possible both to define the best team ever for a new project, and to provide as estimation of the useful days needed to accomplish an activity.

Creating the best team

In the project team identification step the Project Manager needs generally to search for resources on the basis of the skills they possess. The method according to the invention allows to define the best team as a function of the skills needed to accomplish the activities and of the human resources available.

In the features definition step of a new project, the PM defines one or more milestones (relevant activity), and associates to each one of them a series of skills needed and the quantity of human resources needed. By defining the milestones, it is needed to define the composition of the team which is going to deal with each one of these milestones.

The method according to the invention provides:

i) to carry out a research in the personal data registry of human resources and to select only those possessing one or more of the skills needed for developing the milestone;

ii) fill in a list with all the human resources selected at point (i)

iii) to choose, in the list filled at point ii), a human resource to be assigned to the team,

iv) to repeat points i) to iv) up to assign to the team all the human resources needed, by carrying out, at each repetition, a research of the human resources possessing the skills needed to develop the milestone and not yet assigned to the team in the previous repetitions.

The choice of point iii) can be conveniently done by the PM, who has at his disposal all the information needed to be able to carry out impartially his own choice, and is able to identify the human resources most in line with the skills searched for.

In brief, the CWE proposes a list of skills needed for carrying out the milestone, and each time the PM adds a new worker, the system proposes only those one suitable to develop works and not all those registered in system.

Estimation of working days

In the creation step of a milestone, among the procedures which can be activated for a better organization and structuring of the same (as for example the creation of a milestone starting from a predefined template), there is the automatic determination of the number of days needed for the team members to accomplish the milestone.

In the method according to the invention the estimation of the number of days is determined by considering the skill levels possessed by the workers assigned to the milestone development, and by optimizing the days number value on the basis of the effective productivity which these ones are able to provide, besides the effective quantity of work needed to do the activities. The formula used is the following:

$$G_{estimated} = G_{worker} + \left( G_{worker} * (1 - P_{level}) \right)$$

where

$$G_{worker} = \frac{G_{milestone}}{N_{worker}}$$

$$P_{level} = \left( \left( W_{average\_worst} + 1 \right) * \frac{20}{100} \right)$$

$$W_{average\_worst} = \frac{1}{n} \sum_{i=1}^{n} x_i$$

$G_{milestone}$ indicates the total number of days associated to the not closed activities of the milestone, needed for accomplishing it (in presence of parallel activities there will be considered only the days of the longest activity);

$N_{worker}$ indicates the number of workers associated to the milestone;

$G_{worker}$ indicates the number of days pro-capite for worker,

$P_{level}$ indicator of the knowledge level, variable between 0 and 4,

$W_{average\_worsts}$ indicates the worst knowledge level (obtained by the assessments average) which has been found in the team of the milestone.

It is to be observed that this way of estimation formulating considers a knowledge level assessment of the team by means of parameter $P_{level}$. In fact, while the assessment of the worst knowledge level varies, for the productivity level there are obtained the following values:

If assessment = 0 --> $P_{level}$ (0+1)*20/100 = 0.2 --> productive at 20%
If assessment = 1 --> $P_{level}$ = (1+1)*20/100 = 0.4 --> productive at 40%
If assessment 2 --> $P_{level}$ = (2+1)*20/100 = 0.6 --> productive at 60%
If assessment = 3 --> $P_{level}$ = (3+1)*20/100 = 0.8 --> productive at > 80%
If assessment = 4 --> $P_{level}$ = (4+1)*20/100 = 1 --> productive at 100%

The added value given by CWE in managing skills consists in giving the PM, for each worker, a piece of punctual information about all skills possessed by the same with the indication of skill level reached over time.

The described method can be implemented in a software application, preferably usable by web-based applications to allow a remote and multi-user use thereof. Therefore the present invention provides both the just described method and a software application configured to carry out the just described method and a computer on which the application according to the invention is installed.

## Claims

1. Method for managing and assessing human resources skills in an organization, comprising the steps of:

   i) defining a project comprising at least a relevant activity and assigning said project to a project manager (PM);
   ii) defining a skills dictionary where the skills needed for the development of all company activities are defined and type-classified;
   iii) defining a personal data registry of human resources, where all data relating to people who work with any qualification in an organization, are contained;
   iv) at the beginning of his own collaboration with said organization, each one of said people carries out an assessment of his own skills, wherein for each one of said skills defined at point i) the person assigns a level on the basis of the self-assessment of his own skills;
   v) said PM carries out another assessment of skills of each one of said people;
   vi) defining a workers team to be assigned to said project on the basis of the assessments at points v) and vi).

2. Method according to claim 1, **characterized in that** said team definition at point vi) comprises, for each relevant activity, the steps of:

   vi.i) carrying out a research in the personal data registry of human resources, and selecting only those workers possessing one or more of the skills needed for developing the milestone;
   vi.ii) filling in a list with all the human resources selected at point vi.i,
   vi.iii) choosing, in the list filled at point v.ii), a human resource to be assigned to the team,
   vi.iv) repeating points vi.i) to vi.iv) up to assign to the team all the human resources needed, by carrying out, at each repetition, a research of the human resources possessing the skills needed to develop the milestone and not yet assigned to the team in the previous repetitions.

3. Method according to any one of the preceding claims, further comprising the step of: vii) estimating the number of days needed to accomplish each relevant activity as a function of the skill level of the workers assigned to that activity.

4. Method according to claim 3, **characterized in that** said estimation of the number of days needed to accomplish each relevant activity is determined as a function of the assessments of the worker skills besides the effective quantity of work needed to do each activity.

Europäisches
Patentamt

European
Patent Office

Office européen
des brevets

**EUROPEAN SEARCH REPORT**

Application Number

EP 17 42 5098

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/222899 A1 (VARADARAJAN SRIDHAR [IN] ET AL) 6 October 2005 (2005-10-06) * paragraph [0002] - paragraph [0004] * * figures 1,2,10 * * paragraph [0045] * ----- | 1-4 | INV. G06Q10/06 |
| X | US 2009/276294 A1 (ROECKER JOHN T [US]) 5 November 2009 (2009-11-05) * paragraph [0002] - paragraph [0004] * * paragraph [0041] * * paragraph [0051] - paragraph [0054] * * figure 2 * ----- | 1-4 | |

TECHNICAL FIELDS
SEARCHED        (IPC)

G06Q

The present search report has been drawn up for all claims

| Place of search | Date of completion of the search | Examiner |
|---|---|---|
| Munich | 21 December 2017 | Härdeman, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................................................
& : member of the same patent family, corresponding
   document

EPO FORM 1503 03.82 (P04C01)

EP 3 471 031 A1

**ANNEX TO THE EUROPEAN SEARCH REPORT
ON EUROPEAN PATENT APPLICATION NO.**

EP 17 42 5098

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2017

| Patent document cited in search report | Publication date | Patent family member(s) | Publication date |
|---|---|---|---|
| US 2005222899 A1 | 06-10-2005 | NONE | |
| US 2009276294 A1 | 05-11-2009 | NONE | |

EPO FORM P0459

For more details about this annex : see Official Journal of the European Patent Office, No. 12/82